# EUROPÄISCHE PATENTSCHRIFT

(11) **EP 1 800 066 B1**
(45) Veröffentlichungstag und Bekanntmachung des Hinweises auf die Patenterteilung: **11.04.2012**
(21) Anmeldenummer: 05787397.8
(22) Anmeldetag: 08.09.2005
(51) Int. Cl.: F24D 3/10, E04C 2/52

(54) **FERNWÄRMEKOMPAKTSTATION MIT MULTIFUNKTIONALEM SANDWICHRAHMEN FÜR ANLAGENAUFBAUTEN, WELCHE THERMISCH BEAUFSCHLAGTE MEDIEN BEINHALTEN**
COMPACT DISTRICT HEATING STATION WITH MULTIFUNCTIONAL SANDWICH FRAME FOR INSTALLATION SUPERSTRUCTURES CONTAINING HEATED MEDIA
COMPACTE STATION DE CHAUFFAGE URBAIN AVEC CADRE SANDWICH MULTIFONCTIONNEL POUR SUPERSTRUCTURES D'INSTALLATIONS CONTENANT DES FLUIDES CHAUFFES

(30) Priorität: 08.09.2004 DE 102004043278
(43) Veröffentlichungstag der Anmeldung: 27.06.2007
(73) Patentinhaber: Petrick, Robin, 02979 Elsterheide (DE); Petrick, Nico, 01099 Dresden (DE)
(72) Erfinder: Petrick, Robin, 02979 Elsterheide (DE)
(74) Vertreter: Haschick, Gerald
(86) Internationale Anmeldenummer: PCT/EP2005/009665
(87) Internationale Veröffentlichungsnummer: WO 2006/027247

(56) Entgegenhaltungen:
- DE-A1- 19 753 339
- DE-U1- 9 218 738
- US-A- 5 418 986

## Beschreibung

Die Erfindung betrifft eine Fernwärmekompakstation mit einem multifunktionalen Sandwichrahmen für Anlagenaufbauten, welche thermisch beaufschlagte Medien beinhalten, wobei dieser Sandwichrahmen insbesondere eine Isolierfunktion ausführen muss. Des Weiteren dient dieser multifunktionale Sandwichrahmen als Montagerahmen für den entsprechenden Anlagenaufbau.

Gegeben sind Lösungen, welche insbesondere darauf basieren, dass zum Beispiel Verteileranlagen, Fernwärmekompaktanlagen und Regelanlagen auf entsprechende Gitterroste und/oder Stahlkonstruktionen montiert werden, wobei diese Stahlkonstruktionen je nach Ausführungsform auch der Festmontage an dem Standort dienlich sind. Es werden nachträglich alle zu isolierenden Mediumleitungen separat mit zum Beispiel PUR-Schaumstoff als Isolierkörper versehen.

Der wesentliche Nachteil all dieser bekannten technischen Lösungen, welche in einer Vielzahl gegeben sind, führt insbesondere dazu, dass ein separater, konstruktiver Aufbau in Form von Gitterrosten, Stahlkonstruktionen etc. ausgeführt werden muss und gleichzeitig eine Isoliertechnik an den Anlagenaufbauten installiert wird. Dabei ist insbesondere bekannt, dass ein PUR-Isolierkörper bestehend aus wärmebeständigem, FCKW-freiem, geschlossenzelligem Hartschaumstoff verwendet wird. Alle Formteile werden aus zwei Halbschalen zusammengesetzt, welche die zu isolierenden Armaturen und Rohrleitungen vollständig umschließen. Die Halbschalen werden bei der Montage mittels selbstrastenden Edelstahl-Federspangen als wieder lösbare Verbindung fixiert.

Aus einem Prospektmaterial der Firma Petrick & Wolf Energietechnik GmbH & Co. KG ist diese Aufbauisolierung insbesondere dokumentiert, wobei auch weiterhin ein Stahlkonstruktionsrahmen gegeben ist, worauf die Anlagenaufbauten, wie Rohre, Wärmetauscher, Ventile, Stellventile, Absperrarmaturen etc., aufgebracht sind und gesondert mit dem schon benannten Rohrisolierkörper als Dämmungsmaterial versehen wurden. Die spezielle Anfertigung des Montagegestelles bzw. des jeweiligen Isolierkörpers birgt in der geschilderten technischen Lösung einen erheblichen Herstellungskostenaufwand in sich, wobei diese Kosten in einem relativ ungünstigen Verhältnis zu den eigentlichen übrigen Kostenkomponenten, wie Pumpen, Ventile und Rohrmaterial, stehen.

Der vorliegenden Erfindung liegt daher die Aufgabe zu Grunde, eine Fernwärmekompaktstation mit einem multifunktionalen Sandwichrahmen für Anlagenaufbauten, welche thermisch beaufschlagte Medien beinhalten, zu finden und die Nachteile des Standes der Technik zu überwinden, wobei eine Rahmenfunktionalität geschaffen wird, die die Möglichkeit einer thermischen Isolierung ausführt und weitere vorteilhafte, funktionelle Eigenschaften, wie Montagefähigkeit, Bausteinsystem und mechanische Festigkeit beinhaltet.

Aufgabengemäß wurde die Erfindung dadurch gelöst, dass einen Fernwärmekompaktstation mit einem multifunktionaler Sandwichrahmen für Anlagenaufbauten, welche thermisch beaufschlagte Medien beinhalten, gemäß des Patentanspruches 1.

Dabei wurde ein Sandwichrahmen entwickelt, der aus mehreren Sandwichplatten, welche aus Kunststoff, insbesondere aus Polyurethan(PUR)-Hartschaumstoff, gefertigt sind, besteht. In diesem Sandwichrahmen werden thermisch beaufschlagte und/oder Anlagenaufbauten umschlossen. Dabei ist in der jeweiligen Sandwichplatte eine vorgefertigte Ausformung, angepasst an der Baugröße des gegebenen Anlagenaufbaues, wie zum Beispiel Rohr, ausgeführt. Diese vorgefertigten Ausführungsformen sollen erreichen, dass durch die Umschließung in dem Sandwichrahmen über die Sandwichplatten eine entsprechende Isolierung der beinhalteten Anlagenmodule stattfindet.

Der gegebene Sandwichrahmen setzt sich insbesondere aus zwei Sandwichplatten zusammen, welche die entsprechenden Baugruppen durch die vorgefertigten Ausformungen umschließen. Weiterhin ist es möglich, zwischen diesen äußeren Sandwichplatten weitere innen liegende Sandwichplatten anzufertigen, um zu erreichen, dass Querverbindungen oder andere Verlegungsarten von Aufbauten oder Anlagenteilen thermisch umschlossen werden und somit eine Stabilität der Gesamtanlage bewirkt wird. An den vorgegebenen Sandwichplatten, wie der oberen und unteren Sandwichplatte, sind jeweilige Stabilisationsbleche an einer Außenkante eingelassen, vorzugsweise werden diese an der Außenoberfläche eingegossen. Diese Stabilisationsbleche weisen vorgegebene Bohrungen oder Halteschlitze auf, womit die Sandwichplatte für die Montage der Anlagenaufbauten bzw. für die Endmontage an einem gegebenen Standort vorgegeben ist. Die Stabilisationsbleche werden an der jeweiligen Außenkante der Sandwichplatte so angeordnet, dass sie quer zur Montagerichtung der innen liegenden Anlagenaufbauten, wie zum Beispiel Rohre, Platten oder anderen Baugruppen, gegeben sind. Auf Grundlage dieser Quermontage der Stabilisationsbleche ist somit ein konstruktiver Aufbau gegeben, welcher die Stabilität des Sandwichrahmens gewährleistet, da durch die innen liegenden Anlagenbauteile in der Längsrichtung bereits ein Stabilitätsfaktor gegeben ist. An einer gegebenen Sandwichplatte sind bereits Durchlassöffnungen vorhanden, wodurch konstruktive Aufbauelemente außerhalb der Sandwichplatte angeordnet werden können, um somit zu bewirken, dass die Form und Größe der gegebenen Sandwichplatte in einem möglichst geringem Maße verbleiben, um die Montagefähigkeit zu erreichen. Außerdem ist es vorteilhaft, dass die Anlagenaufbauten außerhalb der Sandwichplatte angeordnet sind, um somit einen Zugriff auf jegliche Baugruppen zu haben.

Die wesentlichen Vorteile des Sandwichrahmens, bestehend auf zwei Sandwichplatten bzw. innerhalb dieser zwei Sandwichplatten vorhandenen weiteren Sandwichplatten zur Umschließung entsprechender Baugruppen, sind darin gegeben, dass auf Grundlage des PUR-Schaumstoffes und seiner Eigenschaften eine optimale Isolier- und Stabilitätsfähigkeit der Sandwichplatten vorhanden ist. Der verwendete PUR-Schaumstoff ist absolut Wasser abweisend und hat sich daher in der Praxis als Isoliermaterial bestens bewährt. Der PUR-Isolierschaumstoff besteht aus wärmebeständigem, FCKW-freiem, geschlossenzelligem Hartschaumstoff.

Die weiteren technischen Daten des Hartschaumstoffes sind wie folgt gegeben:

| | |
|---|---|
| spezielles Raumgewicht | 90 kg/m³ |
| Druckfestigkeit | 0,43 N/mm³ |
| Anwendungstemperatur | bis 130 °C |
| Wärmeleitfähigkeit | 0,031 W/mK |
| Baustoffklasse | B 2 |

Des Weiteren sind beste Isoliereigenschaften dieses Sandwichrahmens gegeben, und auf Grundlage der Einbauten der Stabilisationsbleche an den Außenkanten der jeweiligen Sandwichplatte wird eine hohe Festigkeit erreicht. Ebenfalls ist ein Vorteil gegeben, dass durch die Verwendung dieses Sandwichrahmens eine akustische und Schwingungsdämpfung der gegebenen Anlagen vorhanden ist. Aus dem konstruktiven Zusammenbau dieses Sandwichrahmens ist es auch möglich, durch ein so genanntes Baukastensystem verschiedene Anlagenteile zu realisieren. Dabei können insbesondere Größe, Form und Umfang des Sandwichrahmens und der Inhalt mehrerer anderer Platten konstruktiv ausgeführt werden und dem entsprechenden Anlagenteil angepasst sein. Es ist ebenso möglich, im Rahmen dieses Baukastenprinzips Nebenanlagen, Zusatzanlagen mit Hilfe eines weiteren Sandwichrahmens zusammenzuschließen und somit die wesentlichen Vorteile der erfinderischen Lösung auch für Zusatzeinrichtungen und Module zu realisieren.

Über die eingelassenen Stabilisationsbleche, insbesondere in der Rückwand des Sandwichrahmens, bei der Sandwichplatte, sind vorteilhafterweise Bohrungen oder Schlitze gegeben, womit es möglich ist, ohne großen technischen Aufwand die entsprechende Anlage, zum Beispiel in einer Wandmontage, zu realisieren.

Anhand des Ausführungsbeispiels wird der Aufbau bzw. die Anwendung der Sandwichplatte in der Praxis dargestellt. Dabei sind nachfolgende Figuren gegeben:
- Figur 1:: Aufbau Sandwichplatte
- Figur 2:: Anwendung Sandwichplatte
- Figur 3:: Anwendung Sandwichplatte
- Figur 4:: Anwendung Sandwichplatte
- Figur 5:: zusätzliche Sandwichplatte
- Figur 6:: Sandwichplatten Zusammenbau
- Figur 7:: dreidimensionale Ansicht Sandwichplatte
- Figur 7a:: Draufsicht Sandwichplatte
- Figur 7b:: Seitenansicht Sandwichplatte
- Figur 7c:: Seitenansicht Sandwichplatte
- Figur 8:: Schaltplan eines Anlagenaufbaues in Form einer Fernwärmekompaktstation

Die Anwendung und der Aufbau der Fernwärmekompaktstation mit der Sandwichplatte für einen speziellen Anlagenaufbau gemäß dem Patentanspruch 1 wird nachfolgend an einer Fernwärmekompaktstation für indirekten Anschluss an Fernwärme dargestellt.

Die Anlagenaufbauten 13 als Fernwärmekompaktstationen werden als kompakte Einheit gefertigt. Sie enthalten alle erforderlichen Baugruppen zum Anschluss der Gebäudesysteme an das jeweilige Fernwärmenetz. Die Projektierung und Fertigung des Anlagenaufbaues als Fernwärmekompaktstation erfolgt nach den einschlägigen Vorschriften und Richtlinien für Fernwärmeanschlüsse, insbesondere:
- den zutreffenden DIN- und VDE-Vorschriften;
- der Heizungsanlagenverordnung;
- der Druckbehälterverordnung;
- den Richtlinien der AGFW und
- den technischen Anschlussbedingungen des jeweiligen Fernwärmeversorgungsunternehmens.

Die Stationen werden je nach Übertragungsleistung als Wandmontageausführung oder als Wandaufstellung im Zusammenhang mit der erfinderischen Lösung des Sandwichrahmens 11 gefertigt. In beiden Montagevarianten ist die Zugänglichkeit aller Bauteile und Bedienungselemente von vorn gewährleistet, da in der Sandwichplatte 2 entsprechende Durchlassöffnungen 8 und 8' gegeben sind, worauf die Bauteile und Bedienungselemente außerhalb des Sandwichrahmens 11 aufgebaut werden.

Standardgemäß beinhaltet die Fernwärmekompaktstation folgende Funktionsgruppen:
- Fernwärmeübergabestrecke
- Wärmeübertrager mit Vorregelung und den Sicherheitseinrichtungen
- einen oder mehrere Sekundärheizkreise
- Warmwasserbereitung
- Regelungstechnik.

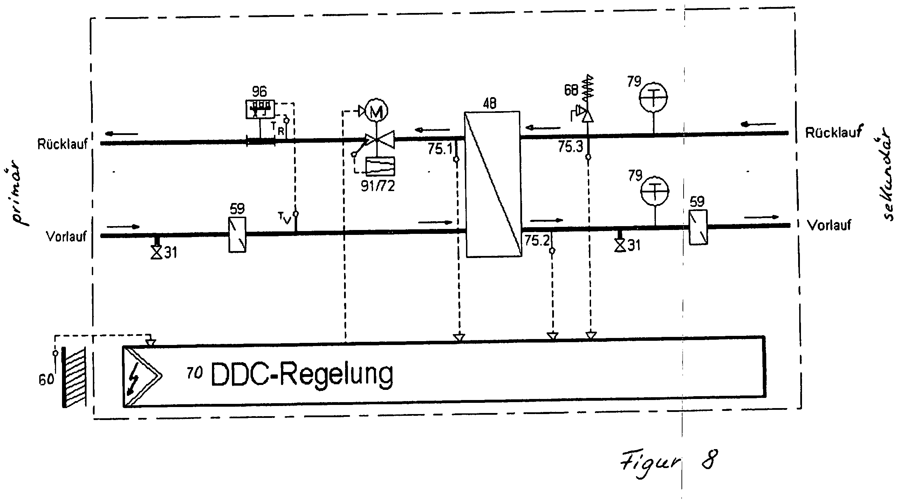

Zur Regelung der Fernwärmekompaktstation, welche als Anlagenaufbau 13 auf dem Sandwichrahmen 11 installiert ist, werden in Abhängigkeit vom Ausrüstungsgrad der Station verschiedene Regelkreise unterschieden, die entsprechend der Aufgabenstellung unterschiedlich arbeiten. Im Vorregelkreis erfolgt mittels eines Stellventils 68 die Regelung der sekundärseitigen Austrittstemperatur des Heizmediums aus dem Wärmeübertrager 48. Bei der Regelung des Heizkreises wird die Heizkreisvorlauftemperatur nach der Außentemperatur, der Raumtemperatur oder einem konstanten Vorgabewert bedarfsabhängig geregelt. Bei der Regelung der Warmwasserbereitung können verschiedene Warmwasserbereitungssysteme geregelt werden (zum Beispiel die Typen: BS / BTL / BTD / BTLRA / BTLDR). Die Übergabestrecke mit dem Vorregelkreis ist die Schnittstelle zwischen dem Fernwärmenetz und der Hausanlage. Der hydraulische Aufbau ist abhängig von den technischen Anschlussbedingungen des Fernwärmeversorgungsunternehmens und den technischen Erfordernissen auf Grund der anliegenden Fernwärmenetzparameter. An die Übergabestrecke schließen sich die Baugruppen des Vorregelkreises an. Der prinzipielle Aufbau dieser Baugruppe ist in der Figur 8 dargestellt. Die Regelung der sekundären Vorlauftemperatur erfolgt durch die gezielte Steuerung des Volumenstroms im Primärkeis (Öffnen bzw. Schließen des Motorstellventils 91/72). Das Vorregelventil 91/72 wird nach dem Wert der Sekundärvorlauftemperatur über den Temperaturfühler Sekundärvorlauf 75.2 geregelt. Je nach eingesetztem Stellantrieb erfolgt eine stetige Ansteuerung oder ein Ansteuerung mit Dreipunktverhalten. Der DDC-Regler 70 vergleicht ständig den Sekundärvorlauf-Istwert mit dem Sollwert und berechnet daraus die erforderliche Stellgröße für den Antrieb des Ventils 91/72. Den Sollwert errechnet der Regler aus den "Temperaturanforderungen der sekundären Regelkreise" und weiteren Parametern. Die höchste Wärmeanforderung ist dabei die dominierende Führungsgröße für den Vorregelkreis. Optional sind die nachfolgend erläuterten Fahrweisen des Vorregelkreises möglich. Dabei ist der Vorregelkreis mit einer frei wählbaren Überhöhung zu fahren. Das heißt der Vorregelkreis stellt sekundär eine festgelegte überhöhte Temperatur bereit. Das ist zum Beispiel notwendig, wenn durch lange Leitungsstrecken zwischen Wärmeübertrager 48 und Verbraucher Wärmeverluste auftreten. Des Weiteren kann der Vorregelkreis wahlweise auch nach einem frei wählbaren konstanten Sollwert oder gleitend nach der Außentemperatur über den Außentemperaturfühler 60 gefahren werden. Der Temperaturfühler Primärrücklauf 75.1 ist für die Realisierung der Zusatzfunktion "Primärrücklauftemperaturbegrenzung" vorgesehen. Beim Erreichen einer frei wählbaren Rücklauftemperatur wird durch stetiges Schließen des Vorregelventils 91/72 eine Überschreitung der maximal erlaubten Rücklauftemperatur verhindert. Diese Funktion sollte jedoch nur aktiv werden, wenn' das Heizungssystem gut abgeglichen ist und die der Auslegung der Station zugrunde gelegte Temperaturspreizung erreicht wird. Ansonsten kann aus auf Grund zu geringer Sekundärvorlauftemperaturen zur Unterversorgung der Gebäude kommen.

Aus der Figur 8 ist nun das Schaltbild einer Fernwärmekompaktstation als Ausführungsbeispiel eines Anlagenaufbaues 13 gegeben. Die technische Funktionalität ist aus der Figur 8 ersichtlich. Es wird ein DDC-Regler 70 für die Regelung der Fernwärmekompaktstation benutzt. Dabei sind Eingangsgrößen über den Temperaturfühler Sekundärrücklauf 75.3 sowie den Temperaturfühler Sekundärvorlauf 75.2 und den Temperaturfühler Primärrücklauf 75.1 sowie über einen Außentemperaturfühler 60 gegeben. Als Ausgangssignal wird ein Stellsignal auf das Durchgangsventil 91/72 ausgeführt. In dem Primärvorlauf ist weiterhin ein Schmutzfilter 59 eingesetzt. Es ist im Sekundärkreis im Vorlauf ein weiterer Schmutzfilter 59 vorhanden. Über Thermometer 79 im Rücklauf bzw. im Vorlauf der Sekundärseite werden entsprechende Temperaturen des Vor- und Rücklaufes der Sekundärseite angezeigt. Des Weiteren ist im Rücklauf der Primärseite ein Wärmemengenzähler 96 angeordnet. Der Plattenwärmeübertrager 48 ist ein Wärmeübertrager bekannter Bauart. Für die Schmutzfilter 59 kommt in dem Vorlauf Primärseite bzw. Vorlauf Sekundärseite eine neuartige Bauweise für Rohrleitungssysteme zum Einsatz. Diese Schmutzfilter 59 können' auch in einzelnen Heizkreisen eingesetzt werden.

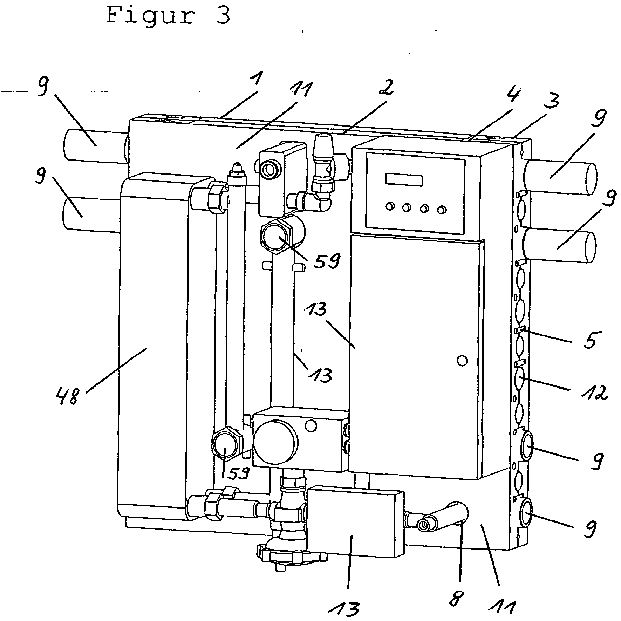

Dieser neuartige Filter zeichnet sich dadurch aus, dass er in seiner Konstruktion ein Filtergehäuse aufweist, welches einen Filterstrom von 90° ausführt und innerhalb dieses Filterstromes ein Filtersieb angeordnet ist, welches über eine Schraubverbindung in Längsrichtung zum Wechsel des Filtersiebes ausgeführt ist. Es ist somit möglich, bei diesem Anlagenaufbau 13 der Fernwärmekompaktstation von vorn (siehe auch Bezugszeichen 59 - Figur 3) das dementsprechende Filtersieb auszuwechseln. Ein weiterer Fortschritt dieses Einsatzes des neuartigen Schmutzfilters ist dadurch gegeben, dass durch die 90°-Ausführung des Filtersystems eine erhebliche Einsparung an Leitungsverlegung vorhanden ist, da die an sich bekannten Filter (Schmutzfilter oder Schmutzfänger) nicht diesen Durchflusslauf von 90° aufweisen. Somit wurde erreicht, dass gerade bei diesem spezifischen Anlagenaufbau 13 durch die Anordnung der beiden Schmutzfilter 59 ein einfacher und übersichtlicher Aufbau der Anlagenaufbauten 13 in Form der Rohrverlegungen mit den einzelnen Bedien- bzw. Bauelementen gemäß Figur 8 ausgeführt ist.

Gerade in der Figur 3 kann man erkennen, wie dieser Einsatz der Schmutzfilter 59 als wesentlicher Vorteil zu sehen ist, da über diese Schmutzfilter 59 und im Winkel von 90° aus dem Sandwichrahmen 11 sofort eine rechtwinklige Weiterleitung über die Anlagenaufbauten 13 in Form von Rohren stattfindet.

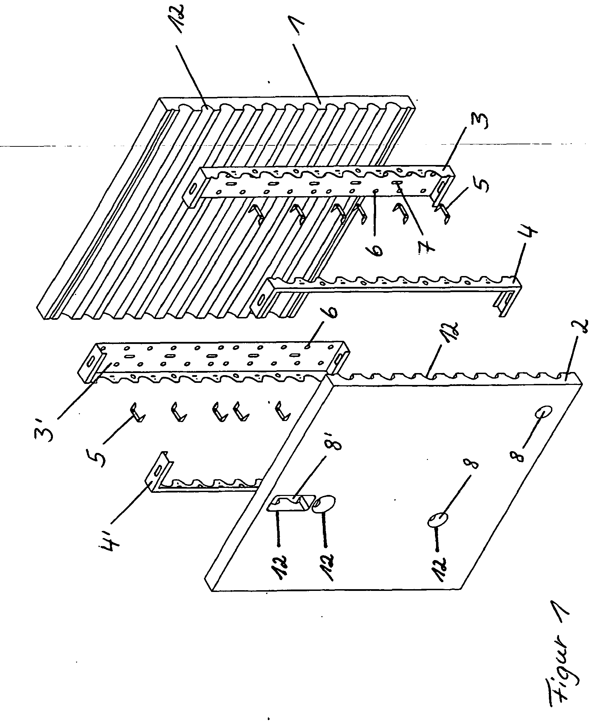

Die Figur 1 zeigt einen Aufbau eines Sandwichrahmens 11 aus einer Sandwichplatte 1 und einer Sandwichplatte 2. Dabei sind diese Sandwichplatten 1 und 2 aus Kunststoff gefertigt, insbesondere aus PUR-Schaumstoff. Der verwendete PUR-Schaumstoff ist absolut Wasser abweisend und daher als Isoliermaterial bestens geeignet. Der PUR-Isolierschaumstoff besteht aus wärmebeständigem, FCKW-freiem, geschlossenzelligem Hartschaumstoff. Diese Eigenschaften bewirken eine optimale Isolier-und Stabilitätsfähigkeit der Sandwichplatten.

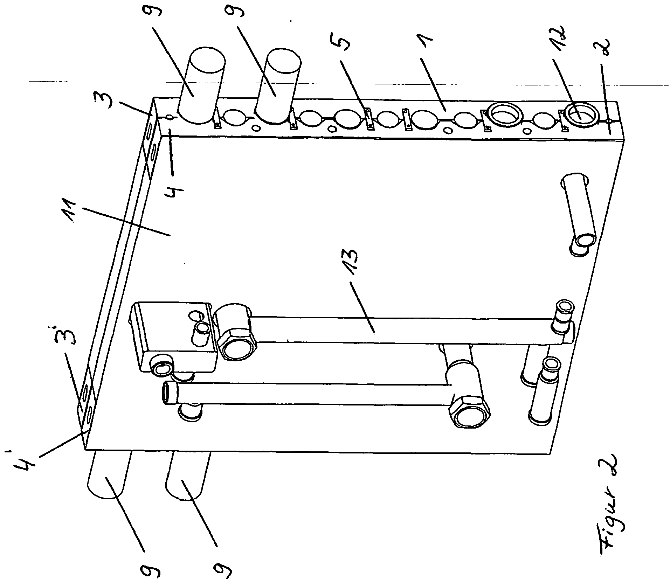

Es ist ersichtlich, dass entsprechende Ausformungen 12 in diesem Ausführungsbeispiel insbesondere für Rohrleitungen gegeben sind. Die Stabilisationsbleche 3 und 3' werden in der Sandwichplatte 1 an der jeweiligen Außenkante quer zur Montagerichtung der Anlagenaufbauten 13 an der Oberkante eingegossen. Die eingearbeiteten Bohrungen 6 bzw. Halteschlitze 7 in dem Stabilisationsblech 3 bzw. 3' sind so angeordnet, dass über diese vorgegebenen Bohrungen 6 und Halteschlitze 7 eine Wandmontage bzw. ein Wandaufstellstandort fixiert werden kann. Außerdem ist es möglich, andere Bauelemente über diese vorhandenen Bohrungen 6 und Halteschlitze 7 anzuordnen. Durch das Einbringen dieser Stabilisationsbleche 3 und 3' erfährt die Sandwichplatte 1 eine hohe Stabilität, da in dieser Ausführungsform in den vorgefertigten Ausformungen 12 Rohre 9 bzw. andere Rohre in Form von Anlagenaufbauten 13 angeordnet sind. An der Sandwichplatte 2 sind ebenfalls Stabilisationsbleche 4 und 4' an der Außenkante eingegossen. Die Sandwichplatte 2 weist weiterhin Durchlassöffnungen 8 bzw. 8' auf, um im Zusammenhang mit den umschlossenen Anlagenaufbauten 13 bzw. den thermisch beaufschlagten Rohren 9 eine Verbindung durch die Durchlassöffnungen 8 und 8' auszuführen und weiterhin die notwendigen Bedien- und Aufbauelemente gemäß Figur 3 bzw. Figur 2 anzuordnen.

In der Figur 2 ist eine zeichnerische Darstellung ausgeführt, welche die Anwendung eines Sandwichrahmens 11 darstellt. Dabei ist innerhalb eines Sandwichrahmens 11 ein thermisch beaufschlagtes Rohr 9 vorhanden. Über die Durchlassöffnungen 8 und 8' der Sandwichplatte 2 werden entsprechende Bauelemente bzw. Rohre durch eine gegebene Schweißverbindung an den thermisch beaufschlagten Rohren 9 angeordnet. Die Sandwichplatte 1 und die Sandwichplatte 2 sind über Verbindungsklemmen 5 seitlich zusammengeklemmt und somit als geschlossene Baueinheit gegeben. Des Weiteren ist es möglich, die beiden Sandwichplatten 1 und 2 über eine Verschraubung, Klemmung oder andere fest lösbare Verbindungsarten zu verbinden. Durch den neuartigen Sandwichrahmen 11 ist nun erreicht, dass gleichzeitig eine Stabilität bzw. auch eine Isolierung der thermisch beaufschlagten Rohre 9 vorhanden ist.

Aus der Figur 3 ist der komplette Zusammenbau des Sandwichrahmens 11 mit den entsprechenden Anlagenaufbauten 13 gemäß den Instrumenten, Bedien-und Bauelementen aus der Figur 8 für die Fernwärmekompaktstation ersichtlich.

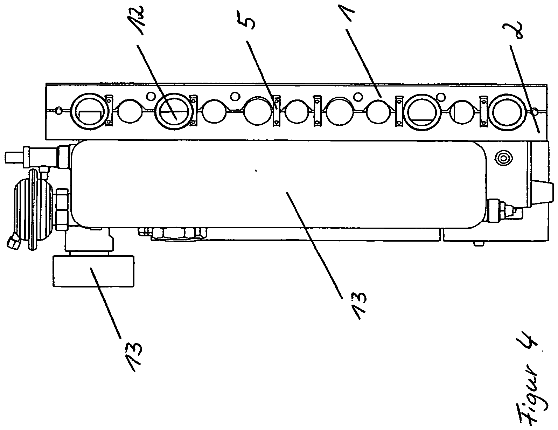

Des Weiteren ist in der Figur 4 eine Seitenansicht des Sandwichrahmens 11 mit seiner Sandwichplatte 1 und 2 erkennbar, worauf die entsprechenden Anlagenaufbauten 13 der Bedien- und Bauelemente angeordnet sind.

Wie aus diesen letztgenannten Figuren ersichtlich, stellt der Sandwichrahmen 11 hierbei ein Grundchassis dar, welches die Funktionen der Isolierung, zum Beispiel der thermisch beaufschlagten Rohre 9, ausführt, die Montagefähigkeit der Fernwärmekompaktstation in verschiedenen Aufbauvarianten über die eingelassenen Stabilisationsbleche 3 in die Sandwichplatte 1 gewährleistet und die schon beschriebenen Vorteile des Sandwichrahmens 11 aufweist.

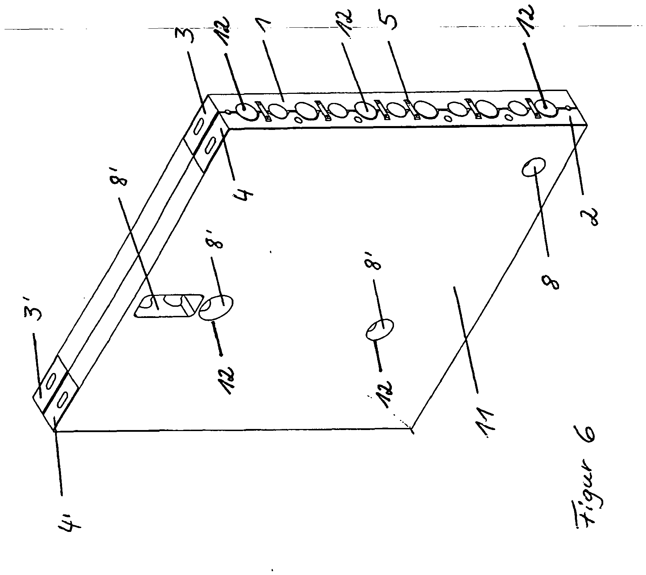

In der Figur 6 ist ein Sandwichrahmen 11 ohne jegliche Anlagenaufbauten 13 erkennbar. Wie aus der Figur 6 ersichtlich, ist es je nach Anwendungsfall Anlagenaufbau möglich, einen entsprechenden Sandwichrahmen herzustellen. Dabei werden über die vorgefertigten Ausformungen 12 die Grundlagen für den Einlass von Bauelementen etc. ausgeführt. Durch den Zusammenschluss über die Verbindungsklemmen 5 der beiden Sandwichplatten 1 und 2 besteht damit ein Grundchassis, worauf entsprechende weitere Anlagenanfbauten 13 über vorgegebene Durchlassöffnungen 8 und 8' in der Sandwichplatte 2 aufgebaut werden können.

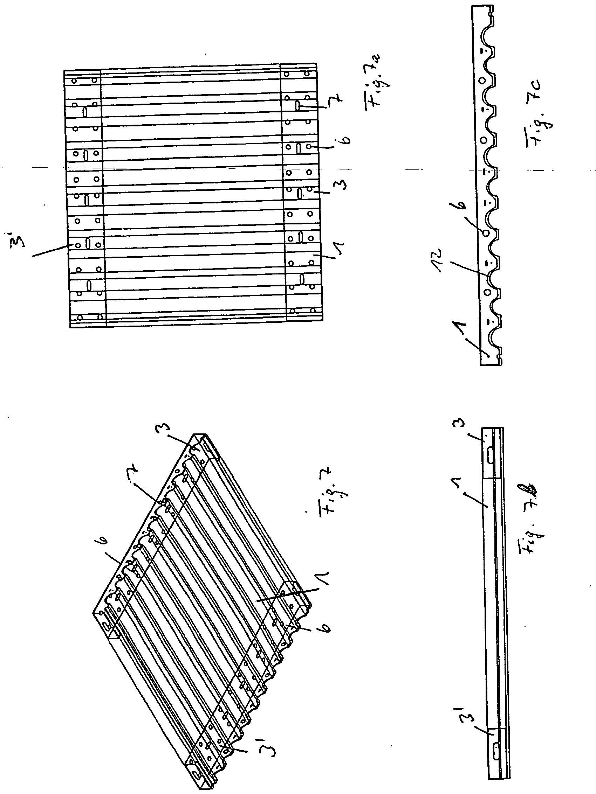

In den Figuren 7, 7a, 7b und 7c ist die Sandwichplatte 1 dargestellt. In der Figur 7 ist eine dreidimensionale Ansicht der Sandwichplatte 7 ausgeführt, woraus ersichtlich ist, dass die Stabilisationsbleche 3 und 3' an der Oberkante der Sandwichplatte 1 eingegossen sind. Des Weiteren sind an der gesamten Länge der Stabilisationsbleche 3 und 3' entsprechende Bohrungen 6 und Halteschlitze 7 vorgesehen, um eine Montage über die Sandwichplatte 1 aus dem gesamten Sandwichrahmen 11 heraus auszuführen.

In der Figur 7a ist eine Draufsicht dieser Sandwichplatte 1 ersichtlich. Des Weiteren ist in den Figuren 7b und 7c eine Seitenansicht der Sandwichplatte 1 gegeben. Wesentlich ist dabei immer, dass das Stabilisationsblech 3 und 3' an der Außenkante quer zu den vorgefertigten Ausformungslinien 12 angeordnet ist. Hier nochmals darauf hinzuweisen, dass diese Stabilisationsbleche 3 und 3' an der Oberkante in den PUR-Schaumstoff eingegossen sind.

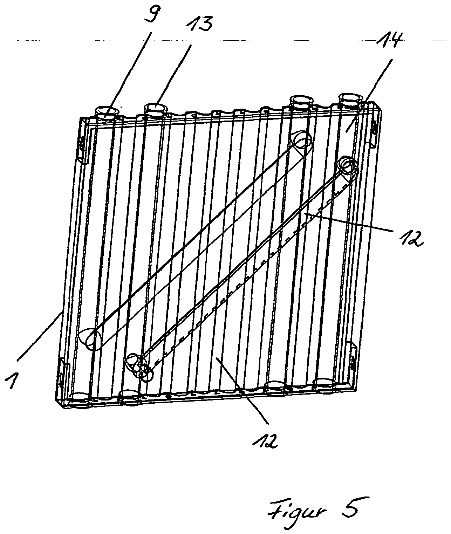

Aus der Figur 5 ist eine weitere Ausführungsvariante des Sandwichrahmens 11 gegeben. Dabei ist es möglich, dass zwischen der Sandwichplatte 1 und einer vorgefertigten Sandwichplatte 2 eine weitere Sandwichplatte 14 angeordnet wird. Über diese Sandwichplatte 14 sind andere Anlagenaufbauten 13 in Form von Bedien- und Bauelementen einordenbar, wie in diesem Ausführungsbeispiel quer zur vorgefertigten Ausformung 12 für die thermisch beaufschlagten Rohre 9.

Es ist also grundsätzlich möglich, mehrere Sandwichplatten 1 und 2 übereinander zu einer Baueinheit oder zu einem Chassis auszuführen. Grundprinzip dieses Anwendungsbeispiels und der erfinderischen Lösung ist es, durch Einbettung entsprechender Anlagenaufbauten 13 einen Sandwichrahmen 11 auszuführen, der insbesondere aus PUR-Hartschaumstoff hergestellt ist. Über diesen Rahmen ist nun ein vorteilhafterweise auszuführender Transport, eine Isolierdämmung gegen Schall und Akustik, eine erhöhte mechanische Festigkeit, ein kostengünstiger Aufbau eines Grundrahmens und Gehäuseteils für einen Anlagenaufbau 13 und eine gute Stapelbarkeit bei Transporten gegeben.

### Bezugszeichen

- 1: Sandwichplatten
- 2: Sandwichplatte
- 3: Stabilisationsblech
- 3': Stabilisationsblech
- 4: Stabilisationsblech
- 4': Stabilisationsblech
- 5: Verbindungsklemme
- 6: Bohrung
- 7: Halteschlitze
- 8: Durchlassöffnung
- 8': Durchlassöffnung
- 9: thermisch beaufschlagtes Rohr
- 11: Sandwichrahmen
- 12: vorgefertigte Ausformungen
- 13: Anlagenaufbauten
- 14: Sandwichplatte

- 48: Wärmeübertrager
- 59: Schmutzfilter
- 60: Außentemperaturfühler
- 68: Stellventil
- 70: DDC-Regler
- 75.1: Temperaturfühler Primärrücklauf
- 75.2: Temperaturfühler Sekundärvorlauf
- 75.3: Temperaturfühler Sekundärrücklauf
- 79: Thermometer
- 91/72: Motorstellventil (Vorregelventil)
- 96: Wärmemengenzähler

## Patentansprüche

1. Fernwärmekompaktstation mit einem multifunktionalen Sandwichrahmen zum indirekten Anschluß eines Gebäudesystems an ein Fernwärmenetz, wobei die Fernwärmekompaktstation thermisch beaufschlagte Baugruppen (9) und als Anlagenaufbauten ausgebildete Bedien-und Bauelemente umfasst, die mit den thermisch beaufschlagten Baugruppen (9) verbunden sind,
wobei
- der multifunktinale Sandwichrahmen (11) zwei äußere Sandwichplatten (1,2) besitzt, wobei die äußeren Sandwichplatten (1,2) aus Kunstoff bestehen, und der Sandwichrahmen (11) ein Grundchassis bildet, und
- in dem Sandwichrahmen (11) thermisch beaufschlagte Anlagenaufbauten in vorgefertigten Ausformungen (12) angepasst der Baugröße der jeweiligen Anlagen-aufbauten vorhanden sind, und wobei
- die Sandwichplatte (2) Durchlassöffnungen (8,8') aufweist, um im Zusammenhang mit den umschlossenen Anlagenaufbauten und den thermisch beaufschlagten Baugruppen (9) eine Verbindung durch die Durchlass-öffnungen (8,8') auszuführen,
und wobei,
die Fernwärmekompakstation folgende Funktionsgruppen beinhaltet:
- Fernwärmeübergabestrecke,
- Wärmeübertrager mit Vorregelung und Sicherheitseinrichtungen,
- einen oder mehere Sekundärheizkreise,
- Warmwasserbereitung,
- Regelungstechnik.

## Claims

1. Compact district heating station with a multifunctional sandwich framework for the indirect connection of a building system to a district heating network, where the compact district heating station comprises assemblies under thermal load (9) and built-on control units and structural elements which are connected to the assemblies under thermal load(9),
where
- the multifunctional sandwich framework (11) has two outer panels (1, 2), the outer sandwich panels (1, 2) being made of plastic, and the sandwich framework (11) forming a base frame, and
- the sandwich framework (11) houses built-on units under thermal load in prefabricated mouldings (12) adapted to the size of the respective built-on units,
and where
- the sandwich panel (2) has openings (8, 8') so that, in conjunction with the sealed built-on units and the assemblies under thermal load (9), a connection can be made through the openings (8, 8'),
and where
the compact district heating station contains the following functional parts:
. District heat transfer section;
. Heat exchanger with pre-control and Safety devices;
. One or more secondary heating circuits;
. Water heating;
. Control system.

## Revendications

1. Station compacte de chauffage urbain avec un cadre sandwich multifonctionnel pour le raccordement indirect d'un système de bâtiment à un réseau de chauffage urbain, la station compacte de chauffage urbain comprenant des composants sollicités thermiquement (9) et des éléments de commande et de construction conçus en tant que superstructures d'installations reliées aux composants sollicités thermiquement (9),
dans laquelle
- le cadre sandwich multifonctionnel (11) possède deux planches externes type sandwich (1, 2), les planches externes type sandwich (1, 2) étant composées de plastique et le cadre sandwich (11) constituant un châssis de base, et
- dans le cadre sandwich (11), des superstructures d'installations sollicitées thermiquement dans des façonnages préfabriqués (12) adaptés à la taille des superstructures d'installations correspondantes étant présentes,
et dans laquelle
- la planche type sandwich (2) présente des ouvertures (8, 8') afin d'établir une connexion avec les superstructures d'installations comprises et les éléments sollicités thermiquement (9) par le biais des ouvertures (8, 8'),
et dans laquelle
la station compacte de chauffage urbain comprend les groupes fonctionnels suivants :
. ligne de fourniture de chauffage urbain,
. échangeur de chaleur avec préréglage et dispositifs de sécurité,
. un ou plusieurs circuits de chauffage secondaires,
. production d'eau chaude,
. technique de régulation.
